# EUROPÄISCHE PATENTSCHRIFT

(11) **EP 3 748 329 B1**
(45) Veröffentlichungstag und Bekanntmachung des Hinweises auf die Patenterteilung: **13.09.2023**
(21) Anmeldenummer: 20175737.4
(22) Anmeldetag: 20.05.2020
(51) Int. Cl.: B60C 25/00, G01B 11/02, G01S 17/88, G01M 17/02, G01S 13/88

(54) **VERFAHREN ZUR INSPEKTION VON TECHNISCHEN GUMMIARTIKELN MIT EINER FESTIGKEITSTRÄGERLAGE UND VORRICHTUNG ZUR DURCHFÜHRUNG DES VERFAHRENS SOWIE DIE VERWENDUNGEN DER VORRICHTUNG**
METHOD FOR INSPECTING TECHNICAL RUBBER ITEMS WITH A REINFORCEMENT LAYER AND DEVICE FOR CARRYING OUT THE METHOD AND USES OF THE DEVICE
PROCÉDÉ D'INSPECTION D'ARTICLES EN CAOUTCHOUC TECHNIQUES DOTÉS D'UNE COUCHE DE SUPPORT DE RÉSISTANCE ET DISPOSITIF DE MISE EN OEUVRE DUDIT PROCÉDÉ, AINSI QU'UTILISATION DU DISPOSITIF

(30) Priorität: 06.06.2019 DE 102019208251
(43) Veröffentlichungstag der Anmeldung: 09.12.2020
(73) Patentinhaber: Continental Reifen Deutschland GmbH, 30165 Hannover (DE)
(72) Erfinder: Lacayo-Pineda, Jorge, 30419 Hannover (DE)
(74) Vertreter: Continental Corporation

(56) Entgegenhaltungen:
- EP-A1- 0 809 097
- DE-A1-102013 016 115
- US-A1- 2018 136 084

## Beschreibung

Die Erfindung betrifft ein Verfahren zur Inspektion von technischen Gummiartikeln mit einer Festigkeitsträgerlage, wie beispielsweise eines Fahrzeugluftreifens mit einer Karkasslage. Die Erfindung betrifft auch eine Vorrichtung zur Durchführung des Verfahrens und eine Verwendung der Vorrichtung.

In neuerer Zeit spielt Automatisierung bei den Herstellungsverfahren verschiedener industrieller Produkte eine große Rolle um die Herstellung dieser Produkte zu beschleunigen, zu vergünstigen oder auf Kundenanfrage durchzuführen.

Ein Schritt bei der Herstellung von Fahrzeugluftreifen ist die Inspektion des final resultierenden Fahrzeugluftreifens. Eine Untersuchung bei dieser Inspektion ist die Kontrolle, ob die Festigkeitsträgerlage des Fahrzeugluftreifens die richtige Position innerhalb der verschiedenen Kautschuklagen eines Fahrzeugluftreifens besitzt. Aus dem Stand der Technik sind hierzu verschiedene Radarsensorsysteme bekannt, welche die Lage des Festigkeitsträgers einer Festigkeitsträgerlage nur sehr ungenau bestimmen können. Dabei kann die Position des Festigkeitsträgers meistens nur bis auf 3 mm genau bestimmt werden, wie dies beispielsweise in der deutschen Patentanmeldung mit der Anmeldeaktenzeichen DE 10 2019 205 559 beschrieben ist. Jedoch ist die Verwendung eines technischen Gummiprodukts oftmals nicht mehr erlaubt, wenn beispielsweise aufgrund eines Herstellungsfehler die Festigkeitsträgerlage bereits um 1 mm in radialer Richtung im Fahrzeugluftreifen verschoben ist oder wenn beispielsweise bei manchen Förderbändern bereits ein Abnutzung der äußeren Kautschuklage von 1 mm erfolgt ist.

Hierbei ist die Genauigkeit des im Stand der Technik bekannten Radarsensorsystems nicht ausreichend, Insbesondere dann, wenn eine vollständige Automatisierung der Inspektion eines final resultierenden Fahrzeugluftreifens oder eines bereits benutzten Förderbandes benötigt wird.

Im Stand der Technik sind die folgenden Radarsysteme bekannt:
DE 102013016115 A1 offenbart beispielsweise ein "Verfahren zur Überwachung des Reifenzustandes eines Fahrzeugreifens während der Fahrt oder in einem Teststand, bei dem mit wenigstens einem Radarsensor an mehreren Stellen einer Lauffläche des Reifens während der Fahrt oder in dem Teststand Radarmessungen über die Dicke des Reifenmaterials durchgeführt werden, aus den Radarmessungen jeweils Daten über Veränderungen innerhalb des Reifenmaterials ermittelt werden, und aus den ermittelten Daten eine Information über den Reifenzustand abgeleitet wird" (s. Anspruch 1).

US2002189336 A1 offenbart einen Radarempfänger und Radartransmittler zum Transportieren eines RF-Signals an einen rotierender Reifen oder Felge und zum Empfangen eines RF-Signals von dem rotierenden Reifen oder Felge, um einen Radar Output zu produzieren (vergleiche Anspruch 1).

EP 1542035 B1 offenbart eine "Reifenüberwachungs-Einrichtung, umfassend: einen Radar-Transceiver (8), der einen Ausgang hat, wobei der Radar-Transceiver (8) so positioniert ist, dass er einen Teil des Reifens (1) mit HF-Signalen anstrahlt und reflektierte Signale vom Reifen (1) empfängt und konfiguriert ist, an seinem Ausgang ein Ausgangssignal zu erzeugen; und einen Signalprozessor (11), der einen Eingang, der mit dem Ausgang des Radar-Transceivers (8) gekoppelt ist, und einen Ausgang hat; wobei der Prozessor (11) konfiguriert ist, eine Signalanalyse auf der Grundlage eines gewählten Bereichs von Harmonischen der reflektierten Signale, die vom Radar-Transceiver (8) empfangen werden, durchzuführen, wobei die Harmonischen auf der Drehzahl des Reifens basieren, und an seinem Ausgang ein Ausgangssignal zu erzeugen, das ausgewählte, den Reifen betreffende Parameter oder Anomalien anzeigt" (s. Anspruch 1). Weitere Vorrichtungen und Verfahren zur Inspektion von Reifen sind in den Dokumenten EP 0 809 097 A1 und US 2018/136084 A1 beschrieben.

Eine Aufgabe, die der Erfindung zugrunde liegt, besteht darin, ein Verfahren bereitzustellen, bei dem eine zuverlässige und genaue Inspektion des Abstandes zwischen Außenwand eines technischen Gummiartikels und der Oberfläche einer metallischen Festigkeitsträgerlage eines technischen Gummiartikels garantiert werden kann. Insbesondere sollen die Verfahrensschritte des bereitzustellenden Verfahrens automatisiert werden.

Gelöst wird diese Aufgabe erfindungsgemäß durch ein Verfahren, gemäß Anspruch 1, zur Inspektion von technischen Gummiartikeln mit einer Festigkeitsträgerlage, wie beispielsweise eines Fahrzeugluftreifens mit einer Karkasslage, umfassend die folgenden Schritte:
A) Herstellen oder Bereitstellen eines technischen Gummiartikeln mit mindestens einer Festigkeitsträgerlage, wobei die Festigkeitsträgerlage eine Kautschukmatrix und einen metallischen Festigkeitsträger umfasst,
B) Messen eines ersten Abstandes mittels einer erste Abstandsmesseinheit, wobei der erste Abstand zwischen einer Messfläche auf einer Oberfläche des metallischen Festigkeitsträger und der ersten Abstandsmesseinheit gemessen wird, wobei die erste Abstandsmesseinheit mindestens einen Radarwellensender und einen Radarwellenempfänger umfasst und zum Ermitteln eines Abstandes jeweils aus einer Laufzeit eines Radarwellensignals zwischen Radarwellensender, Mess-/Bezugsfläche und Radarwellenempfänger geeignet ist,
C) Messen eines zweiten Abstandes mittels einer zweiten Abstandsmesseinheit, wobei der zweite Abstand zwischen einer relativ zur Messfläche festen Bezugsfläche auf einer Außenwand der einen Lage des technischen Gummiartikels und der zweiten Abstandsmesseinheit gemessen wird, wobei die zweite Abstandsmesseinheit mindestens einen Laser und einen Laserlichtdetektor umfasst und zum Ermitteln des Abstandes jeweils aus einer Laufzeit eines Lasersignals zwischen Laser, Bezugsfläche und Laserlichtdetektor geeignet ist, wobei aus der Differenz des ersten Abstands und des zweiten Abstands nun der Abstand zwischen der Außenwand und der Oberfläche des Festigkeitsträgers ermittelt wird. Überraschenderweise wurde im Rahmen der vorigen Erfindung herausgefunden, dass die Inspektion der richtigen Position des Festigkeitsträgers in einem Fahrzeugluftreifen oder in einem Förderband durch die Unterteilung in zwei Teilinspektionen, nämlich die Schritte B) und C) eines erfindungsgemäßen Verfahrens, genauer durchgeführt werden kann. Die erste Teilinspektion in Schritt B) wird dabei so durchgeführt, dass mittels einer ersten Abstandmesseinheit nur die Distanz von der ersten Abstandmesseinheit bis zur Oberfläche des Festigkeitsträgers gemessen wird. Mittels einer zweiten Abstandmesseinheit wird dann in der zweiten Teilinspektion in Schritt C) der Abstand von der ersten Abstandmesseinheit zu einer relativ zur in Schritt B) gemessenen Oberfläche des metallischen Festigkeitsträgers angeordneten Außenwand des technischen Gummiartikels, wie beispielsweise einem Förderband oder einem Fahrzeugluftreifen, festgestellt. Da die erste und zweite Abstandsmesseinheit vorzugsweise mit den gleichen Abstand zu der besagten Außenwand montiert werden oder weil der Unterschied zwischen dem Abstand der ersten Abstandsmesseinheit zu der besagten Außenwand und dem Abstand der zweiten Abstandsmesseinheit zu der besagten Außenwand bekannt ist, kann auf diese Weise auch der Abstand zwischen der besagten Außenwand des technischen Gummiartikels und der Oberfläche des Festigkeitsträgers ermittelt werden. Die Schwierigkeiten, welche bei im Stand der Technik bekannten Verfahren daraus resultieren, dass die Außenwand eines technischen Gummiartikels meist sehr unterschiedliche Materialeigenschaften im Vergleich zu der Oberfläche eines Festigkeitsträgers dieses technischen Gummiartikels aufweist, können somit durch die vorliegende Erfindung überwunden werden. Überraschenderweise ergaben sich mit dem erfindungsgemäßen Verfahren Messgenauigkeiten von 0,1 mm oder besser, welche für die Detektion der vorstehend beschriebenen Herstellungsfehler oder der vorstehend beschriebenen Abnutzung bei Förderbändern mehr als ausreichend ist. Dies stellt eine besondere Leistung der vorliegenden Erfindung dar.

Zusätzlich ist ein erfindungsgemäßes Verfahren ohne Probleme automatisierbar, insbesondere mit den konkreten Beispielen für die nachstehend beschriebenen erste und zweite Abstandsmesseinheit.

Im Rahmen der vorliegenden Erfindung umfasst der Ausdruck "Messfläche" insbesondere eine Fläche eines Festigkeitsträgers eines technischen Gummiartikels, welche die erste Abstandsmesseinheit detektieren kann. So können beispielsweise Metalloberflächen problemlos von Radarsensoren mit einem Radarwellensender und einen Radarwellenempfänger wie vorstehend oder nachstehend beschrieben problemlos detektiert werden.

Im Rahmen der vorliegenden Erfindung umfasst der Ausdruck "Bezugsfläche" insbesondere auf eine Fläche, welche sich an dem technischen Gummiartikel umfassend die besagte Messfläche befindet und somit immer einen wohl definierten Abstand zur Messfläche aufweist und welche von der zweiten Abstandsmesseinheit detektiert werden kann.

Bevorzugt ist ein Verfahren wie vorstehend beschrieben oder wie vorstehend als bevorzugt beschrieben, wobei der technische Gummiartikel ein Fahrzeugluftreifen, ein Schlauch, ein Riemen oder ein Förderband ist.

Bevorzugt ist ein Verfahren wie vorstehend beschrieben oder wie vorstehend als bevorzugt beschrieben, wobei
- räumlich zwischen der ersten oder zweiten Abstandsmesseinheit und der besagten Außenwand der einen Lage keine weiteren Lagen vorhanden sind
   und/oder
- der technische Gummiartikel weitere Lagen, wie beispielsweise weitere Kautschuklagen, einen Squeegee oder Innerliner, aufweist.

Bevorzugt ist ein Verfahren wie vorstehend beschrieben oder wie vorstehend als bevorzugt beschrieben, wobei
- die Festigkeitsträgerlage eine parallel zur Messrichtung der ersten und zweiten Abstandsmesseinheit verlaufende Quererstreckung aufweist und die Dicke der ersten Lage entlang dieser Quererstreckung im Bereich von 1 bis 50 cm liegt, bevorzugt im Bereich von 1 bis 10 cm,
   und/oder
- der Abstand zwischen einer Oberfläche des metallischen Festigkeitsträgers der Festigkeitsträgerlage und der besagten Außenwand der einen Lage im Bereich von 0 bis 50 cm liegt, bevorzugt im Bereich von 0,1 bis 50 cm,
   und/oder
- den nachstehend beschriebenen dritten Abstand zwischen dem Radarwellensender und der besagten Außenwand der einen Lage im Bereich von 0,1 bis 100 cm liegt.

Bevorzugt ist ein Verfahren wie vorstehend beschrieben oder wie vorstehend als bevorzugt beschrieben, wobei
- der Festigkeitsträger der Festigkeitsträgerlage ein Metall umfasst ausgesucht aus der Gruppe bestehend aus Stahl, Eisen, Magnesium, Aluminium, Chrom, Titan, Nickel, Zink, Kupfer und aus einer Mischung dieser Materialien,
   und/oder
- die eine Lage mit der besagten Außenwand die Festigkeitsträgerlage selbst oder eine weitere Kautschuklage ist.

Ein Vorteil des vorstehend beschriebenen Aspekts der vorliegenden Erfindung ist, dass insbesondere die vorstehend beschriebenen Materialien sehr unterschiedliche Materialeigenschaften aufweisen und ihre Oberflächen daher schlecht mit nur einer einzigen Abstandsmesseinheit detektiert werden können. Die vorstehend beschriebene Gruppe an Metallen lässt sich besonders gut mit einem nachstehend beschriebenen Radarwellensensor und Radarwellenempfänger detektieren.

Bevorzugt ist ein Verfahren wie vorstehend beschrieben oder wie vorstehend als bevorzugt beschrieben, wobei in Schritt B) zusätzlich die erste Abstandsmesseinheit einen dritten Abstand zwischen der relativ zur Messfläche festen Bezugsfläche auf einer Außenwand einer Lage des technischen Gummiartikels und der ersten Abstandsmesseinheit misst.

Ein Vorteil des vorstehend beschriebenen Aspekts der vorliegenden Erfindung ist, dass mit der Messung in Schritt C) eines erfindungsgemäßen Verfahrens die vorstehend beschriebene zusätzliche Messung in Schritt B) überprüft werden kann, da es häufig zu Fehlern kommt, wenn die besagte erste Abstandsmesseinheit sowohl den ersten als auch den zweiten Abstand wie vorstehend beschrieben misst.

Bevorzugt ist ein Verfahren wie vorstehend beschrieben oder wie vorstehend als bevorzugt beschrieben, wobei die erste Abstandsmesseinheit in Schritt B) bevorzugt zusätzlich den besagten dritten Abstand zwischen der relativ zur Messfläche festen Bezugsfläche auf einer Außenwand einer Lage des technischen Gummiartikels und der ersten Abstandsmesseinheit misst.

Ein Vorteil der vorliegenden Erfindung ist, dass bei einer Radarmessung Gummi ohne Probleme durchdrungen werden kann um den im Gummi befindlichen metallischen Festigkeitsträger zu detektieren. Leider ist es bei Radarmessungen häufig sehr schwierig, genau bei einer Messung zwischen dem Signal der Reflexion von der Oberfläche des Festigkeitsträgers und dem sehr schwachen Signal der Reflexion von der Gummiaußenwand des technischen Gummiartikels zu unterscheiden. Daher ist allein einer Radarmessung nicht ausreichend, um die vorstehend beschriebenen Genauigkeiten von 0,1 mm oder besser zu erreichen.

Ein Vorteil der vorliegenden Erfindung ist, dass mittels einer Lasermessung wie vorstehend beschrieben die Außenwand eines technischen Gummiartikels mit einer beliebig hohen Genauigkeit, von oftmals weit unter 1 µm, bestimmen lässt.

Bevorzugt ist ein Verfahren wie vorstehend beschrieben oder wie vorstehend als bevorzugt beschrieben, wobei das Verfahren zusätzlich den folgenden Schritt D) umfasst:
D) Rotieren des technischen Gummiartikels mittels einer automatisierten Rotiereinheit um eine Rotationsachse oder Befördern des technischen Gummiartikels mittels einer automatisierten Fördereinheit in eine Förderrichtung, sodass entlang einer Haupterstreckung des technischen Gummiartikels der Abstand zwischen einer Messfläche und einer Bezugsfläche des technischen Gummiartikels gemessen werden kann.

Ein Vorteil des vorstehend beschriebenen Aspekts der vorliegenden Erfindung ist, dass mittels einer vorstehend beschriebenen Rotiereinheit oder einer vorstehend beschriebenen Fördereinheit das erfindungsgemäße Verfahren ohne Probleme automatisiert werden kann.

Bevorzugt ist ein Verfahren wie vorstehend beschrieben oder wie vorstehend als bevorzugt beschrieben, wobei die erste Abstandsmesseinheit mehrere Radarwellensender und Radarwellenempfänger umfasst und die zweite Abstandsmesseinheit mehrere Laser und mehrere Laserlichtdetektoren umfasst, wobei die Radarwellensender und die Radarwellenempfänger in der ersten Abstandsmesseinheit und die Laser und die Laserlichtdetektoren in der zweiten Abstandsmesseinheit so angeordnet sind, dass der Abstand zwischen einer Messfläche und einer Bezugsfläche des technischen Gummiartikels entlang einer zur Haupterstreckung senkrecht verlaufenden Quererstreckung des technischen Gummiartikels gemessen werden kann.

Ein Vorteil des vorstehend beschriebenen Aspekts der vorliegenden Erfindung ist, dass in kürzester Zeit der Abstand zwischen Festigkeitsträger und Außenwand des technischen Gummiartikels entlang der gesamten Quererstreckung des technischen Gummiartikels gemessen werden kann. Die besagte Quererstreckung des technischen Gummiartikels verläuft dabei senkrecht zur Messrichtung und zur vorstehend beschriebenen Rotationsrichtung oder Förderrichtung in dem vorstehend beschriebenen Schritt D).

Im Rahmen der vorliegenden Erfindung beschreibt der Ausdruck "Haupterstreckung" insbesondere die Erstreckung in Umfangsrichtung bei einem Fahrzeugluftreifen oder anderen rundähnlichen Gummiartikeln und die Erstreckung in Förderrichtung bei einem Förderband oder ähnlichen Gummiartikeln. Die vorstehend beschriebene Rotationseinheit rotiert einen Fahrzeugluftreifen im Rahmen der vorliegenden Erfindung in eine Rotationsrichtung, welche der Umfangsrichtung des Fahrzeugluftreifens entspricht.

Im Rahmen der vorliegenden Erfindung beschreibt der Ausdruck "Messrichtung" insbesondere die Richtung, in der der Radarwellensender die Radarwellen sendet oder in der der Laser den Laserstrahl sendet.

Bevorzugt ist ein Verfahren wie vorstehend beschrieben oder wie vorstehend als bevorzugt beschrieben, wobei der eine oder die mehreren Radarwellensender und Radarwellenempfänger und der eine oder die mehreren Laser und Laserlichtdetektoren um einen Winkel gedreht werden kann, wobei die Drehachse der Drehung senkrecht zur Messrichtung des Radarwellensenders und Radarwellenempfängers oder zur Messrichtung des Lasers und Laserlichtdetektors ist und bevorzugt parallel zur vorstehend beschriebenen Quererstreckung des technischen Gummiartikels der besagte Winkel ist hierbei bevorzugt 0° bis 50°, besonders bevorzugt 1° bis 30°. Die Drehrichtung um die Drehachse verläuft dabei parallel zur besagten Quererstreckung des technischen Gummiartikels.

Ein Vorteil des vorstehend beschriebenen Aspekts der vorliegenden Erfindung ist, dass in kürzester Zeit der Abstand zwischen Festigkeitsträger und Außenwand des technischen Gummiartikels entlang der gesamten Quererstreckung des technischen Gummiartikels gemessen werden kann. Die besagte Quererstreckung des technischen Gummiartikels verläuft dabei senkrecht zur Messrichtung und zur vorstehend beschriebenen Rotationsrichtung oder Förderrichtung in dem vorstehend beschriebenen Schritt D).

Im Rahmen der vorliegenden Erfindung verläuft die besagte Drehachse insbesondere senkrecht zur Rotationsachse des Fahrzeugluftreifens oder zur Rotationsachse der vorstehend beschriebene Rotiereinheit.

Bevorzugt ist ein Verfahren wie vorstehend beschrieben oder wie vorstehend als bevorzugt beschrieben, wobei der mindestens eine Laser und der mindestens eine Laserlichtdetektor dazu eingerichtet sind, elektromagnetische Wellen mit einer Wellenlänge im Bereich von 250 bis 1100 nm zu senden bzw. zu empfangen, mit einer Wellenlänge in einem Bereich von 300 bis 800 nm.

Ein Vorteil des vorstehend beschriebenen Aspekts der vorliegenden Erfindung ist, dass die vorstehend beschriebenen Laser einen mit dem menschlichen Auge sichtbaren Messstrecke erzeugen und somit eine Kalibrierung oder eine Positionierung vor oder nach dem Verfahren durch einen Mitarbeiter vereinfacht wird. Zudem ist auch der Umgang mit dem Laser sicherer, da der Mitarbeiter stets mit dem einen Auge überprüfen kann, wo das gefährliche Laserlicht derzeitigen hin strahlt.

Bevorzugt ist ein Verfahren wie vorstehend beschrieben oder wie vorstehend als bevorzugt beschrieben, wobei der mindestens eine Radarwellensender und der mindestens eine Radarwellenempfänger dazu eingerichtet sind, elektromagnetische Wellen in einem Frequenzbereich von 50 bis 500 GHz zu senden bzw. zu empfangen, bevorzugt in einem Frequenzbereich von in einem Bereich von 60 bis 250 GHz, besonders bevorzugt in einem Frequenzbereich von in einem Bereich von 76 bis 78 GHz und 122 bis 124 GHz.

Ein Vorteil des vorstehend beschriebenen Aspekts der vorliegenden Erfindung ist, dass mittels der vorstehend beschrieben Strahlung der Abstand zwischen der Außenwand des technischen Gummiartikels und der Oberfläche des Festigkeitsträgers in dem technischen Gummiartikel ausreichend genau gemessen werden kann.

Die vorstehend beschriebenen vorteilhaften Aspekte eines erfindungsgemäßen Verfahrens zur Inspektion von technischen Gummiartikeln mit einer Festigkeitsträgerlage gelten auch für sämtliche Aspekte einer nachstehend beschriebenen Vorrichtung und die nachstehend diskutierten vorteilhaften Aspekte erfindungsgemäßer Vorrichtungen gelten entsprechend für sämtliche Aspekte eines erfindungsgemäßen Verfahrens zur Inspektion von technischen Gummiartikeln mit einer Festigkeitsträgerlage.

Die Erfindung betrifft auch eine Vorrichtung, gemäß Anspruch 13, zur Durchführung eines Verfahrens nach den vorangehenden Ansprüchen, wobei die Vorrichtung umfasst:
- mindestens eine erste Abstandsmesseinheit, welche mindestens einen Radarwellensender und einen Radarwellenempfänger umfasst und zum Ermitteln des Abstandes jeweils aus einer Laufzeit eines Radarwellensignals zwischen Radarwellensender, Mess-Bezugsfläche und Radarwellenempfänger geeignet ist,
- mindestens eine zweite Abstandsmesseinheit, welche mindestens einen Laser und einen Laserlichtdetektor umfasst und zum Ermitteln des Abstandes jeweils aus einer Laufzeit eines Lasersignals zwischen Laser, Bezugsfläche und Laserlichtdetektor geeignet ist,
   und
- eine Halteeinheit zum Halten eines technischen Gummiartikels während der Durchführung eines Verfahrens wie vorstehend beschrieben oder wie vorstehend als bevorzugt beschrieben oder während der Verwendung wie nachstehend beschrieben.

Die vorstehend beschriebenen vorteilhaften Aspekte einer erfindungsgemäßen Vorrichtung zur Durchführung eines erfindungsgemäßen Verfahrens und eines erfindungsgemäßen Verfahrens zur Inspektion von technischen Gummiartikeln mit einer Festigkeitsträgerlage gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte einer erfindungsgemäßen Vorrichtung zur Durchführung eines erfindungsgemäßen Verfahrens und eines erfindungsgemäßen Verfahrens zur Inspektion von technischen Gummiartikeln mit einer Festigkeitsträgerlage.

Die Erfindung betrifft auch eine Verwendung einer wie vorstehend beschrieben oder wie vorstehend als bevorzugt beschrieben zur Inspektion von technischen Gummiartikeln mit einer Festigkeitsträgerlage.

### Figurenbeschreibung:

- Figur 1:: Schematische Darstellung der Durchführung eines erfindungsgemäßen Verfahrens an einem Fahrzeugluftreifen mit einer Gürtellage als Beispiel eines technischen Gummiartikels;
- Figur 2a:: Schematische Darstellung eines möglichen Messergebnisses aus der Messung mit der ersten Abstandsmesseinheit;
- Figur 2b:: Schematische Darstellung eines möglichen Messergebnisses aus der Messung mit der zweiten Abstandsmesseinheit.

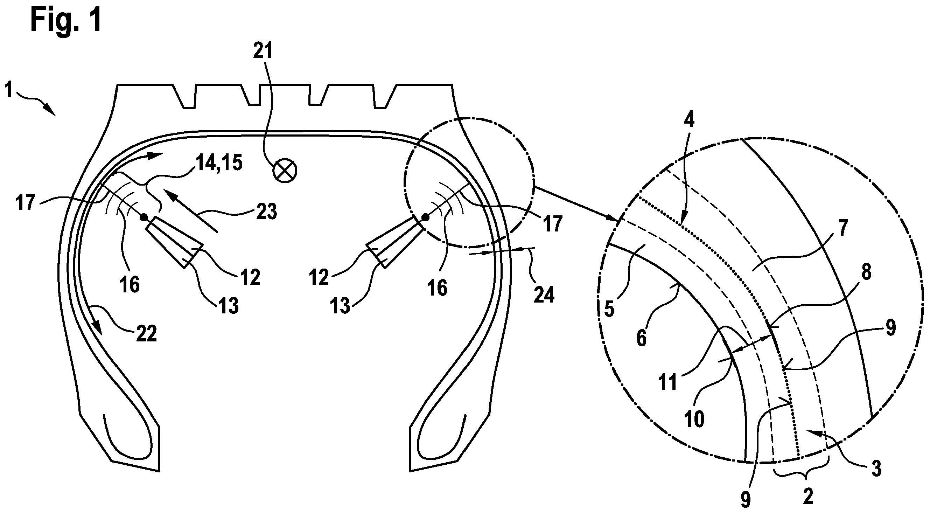

Figur 1 zeigt eine schematische Darstellung einer erfindungsgemäßen Vorrichtung mit einer ersten Abstandsmesseinheit 12 und einer zweiten Abstandsmesseinheit 13 bei der Inspektion eines Fahrzeugluftreifens als Beispiel eines technischen Gummiartikels 1. Der Fahrzeugluftreifen 1 umfasst dabei eine Festigkeitsträgerlage 2 mit einer Kautschukmatrix 3 und einen metallischen Festigkeitsträger 4 sowie eine Lage 5 mit einer Außenwand 6 weitere Lagen 7. In Figur 1 ist die eine Lage 5 der Innerliner des Fahrzeugluftreifens 1. Gemäß dem erfindungsgemäßen Verfahren sendet die erste Abstandsmesseinheit 12 über dem Radarwellensender Radarwellen 16 in Messrichtung 23 aus, welche von der Messfläche 8 auf der Oberfläche 9 des Festigkeitsträgers 4 reflektiert werden und von dem Radarwellenempfänger der ersten Abstandsmesseinheit 12 gemessen werden können. Auf diese Weise kann die Summe des Abstandes 11 und des Abstandes 15 ermittelt werden. Gemäß dem erfindungsgemäßen Verfahren sendet die zweite Abstandsmesseinheit 13 über den Laser Laserlicht 17 in Messrichtung 23 aus, welches von der Bezugsfläche 10 auf der Außenwand 6 der Lage 5 reflektiert werden und von einem Laserlichtdetektor der weiten Abstandsmesseinheit 23 gemessen werden können. Auf diese Weise kann der Abstand 14 ermittelt werden.

Aus der Differenz des ermittelten Abstands 14 und der vorstehend beschriebenen Summe des Abstandes 11 und des Abstandes 15 kann nun der Abstand zwischen der Außenwand 6 und der Oberfläche 9 des Festigkeitsträgers 4 ermittelt werden.

Durch eine Drehung der ersten und zweiten Abstandsmesseinheit 12, 13 in Richtung der Quererstreckung 22 kann zudem ein größerer Bereich des technischen Gummiartikels 1 vermessen werden. Wenn nun zusätzlich der in Figur 1 gezeigte Fahrzeugluftreifen 1 in die Haupterstreckungsrichtung 21 gedreht wird, so ist eine vollständig automatisierte und die gesamte Außenwand 6 des Innerliners 5 des Fahrzeugluftreifens 1 umfassende Inspektion möglich. Die Halteeinheit einer erfindungsgemäßen Vorrichtung zum Halten eines technischen Gummiartikels 1 während der Inspektion ist der Übersicht halber in Figur 1 nicht gezeigt. Die Dickenerstreckung 24 verläuft senkrecht zur Quererstreckung 22 und senkrecht zur Haupterstreckung 21.

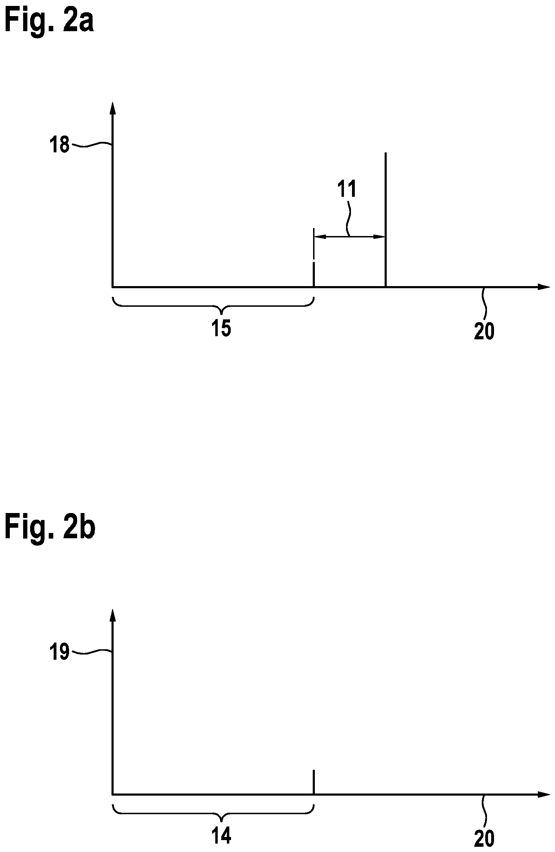

Figur 2a zeigt eine schematische Darstellung eines Messdiagramme der Messung mit einer ersten Abstandsmesseinheit 12 wobei die y-Achse die Intensität 18 der Radarwellen 16 anzeigt und die x-Achse die Längeneinheit für die Ermittlung der vorstehend beschriebenen Summe des Abstandes 11 und des Abstandes 15. Je nach Beschaffenheit des technischen Gummiartikels 1 kann unter Umständen auch allein aus einer solchen Messung der Abstand 15 gemessen werden.

Figur 2b zeigt eine schematische Darstellung eines Messdiagramme der Messung mit einer zweiten Abstandsmesseinheit 13, wobei die y-Achse die Intensität 19 des Laserlicht 17 anzeigt und die x-Achse die Längeneinheit 20 für die Ermittlung des Abstandes 14.

### Bezugszeichenliste:

- 1: technischer Gummiartikel, Fahrzeugluftreifen
- 2: Festigkeitsträgerlage, Karkasslage
- 3: Kautschukmatrix
- 4: Festigkeitsträger, metallischer Festigkeitsträger
- 5: eine Lage, Innerliner
- 6: Außenwand der einen Lage, Außenwand des Innerliners
- 7: weitere Lage
- 8: Messfläche
- 9: Oberfläche des Festigkeitsträger
- 10: Bezugsfläche
- 11: Abstandes zwischen einer Messfläche auf einer Oberfläche des metallischen Festigkeitsträger und einer relativ zur Messfläche festen Bezugsfläche auf einer Außenwand einer Lage des technischen Gummiartikels
- 12: erste Abstandsmesseinheit mit Radarwellensender
- 13: zweite Abstandsmesseinheit mit Laser
- 14: Abstandes zwischen der Bezugsfläche auf einer Außenwand einer Lage des technischen Gummiartikels und der zweiten Abstandmesseinheit
- 15: Abstandes zwischen der Bezugsfläche auf einer Außenwand einer Lage des technischen Gummiartikels und der ersten Abstandmesseinheit
- 16: Radarwellen
- 17: Laserstrahl, Laserlicht
- 18: Intensität der Radarwellen
- 19: Intensität des Laserlichts
- 20: physikalische Längeneinheit für die x-Achse
- 21: Haupterstreckung, Rotationsrichtung
- 22: Quererstreckung, Drehrichtung
- 23: Messrichtung
- 24: Dickenerstreckung

## Patentansprüche

1. Verfahren zur Inspektion von technischen Gummiartikeln (1) mit einer Festigkeitsträgerlage (2), wie beispielsweise eines Fahrzeugluftreifens (1) mit einer Karkasslage (2), umfassend die folgenden Schritte:
A) Herstellen oder Bereitstellen eines technischen Gummiartikeln (1) mit mindestens einer Festigkeitsträgerlage (2), wobei die Festigkeitsträgerlage (2) eine Kautschukmatrix (3) und einen metallischen Festigkeitsträger (4) umfasst,
B) Messen eines ersten Abstandes mittels einer erste Abstandsmesseinheit, wobei der erste Abstand zwischen einer Messfläche (8) auf einer Oberfläche (9) des metallischen Festigkeitsträger (4) und der ersten Abstandsmesseinheit (12) gemessen wird, wobei die erste Abstandsmesseinheit (12) mindestens einen Radarwellensender und einen Radarwellenempfänger umfasst und zum Ermitteln eines Abstandes (11, 15) jeweils aus einer Laufzeit eines Radarwellensignals zwischen Radarwellensender, Mess-Bezugsfläche (8, 10) und Radarwellenempfänger geeignet ist,
C) Messen eines zweiten Abstandes (14) mittels einer zweiten Abstandsmesseinheit (13), wobei der zweite Abstand (14) zwischen einer relativ zur Messfläche (8) festen Bezugsfläche (10) auf einer Außenwand (6) der einen Lage (5) des technischen Gummiartikels (1) und der zweiten Abstandsmesseinheit (13) gemessen wird, wobei die zweite Abstandsmesseinheit (13) mindestens einen Laser und einen Laserlichtdetektor umfasst und zum Ermitteln des Abstandes (14) jeweils aus einer Laufzeit eines Lasersignals zwischen Laser, Bezugsfläche und Laserlichtdetektor geeignet ist,
wobei aus der Differenz des ersten Abstand und des zweiten Abstand nun der Abstand zwischen der Außenwand (6) und der Oberfläche (9) des Festigkeitsträgers (4) ermittelt wird.

2. Verfahren nach Anspruch 1, wobei der technische Gummiartikel (1) ein Fahrzeugluftreifen, ein Schlauch, ein Riemen oder ein Förderband ist.

3. Verfahren nach einem der vorangehenden Ansprüche, wobei in Schritt B) zusätzlich die erste Abstandsmesseinheit (12) einen dritten Abstand (15) zwischen der relativ zur Messfläche (8) festen Bezugsfläche (10) auf einer Außenwand (6) der einen Lage (5) des technischen Gummiartikels (1) und der ersten Abstandsmesseinheit (12) misst.

4. Verfahren nach einem der vorangehenden Ansprüche, wobei
- räumlich zwischen der ersten oder zweiten Abstandsmesseinheit (12, 13) und der besagten Außenwand (6) der einen Lage (5) keine weiteren Lagen vorhanden sind und/oder
- der technische Gummiartikel (1) weitere Lagen (7), wie beispielsweise weitere Kautschuklagen, einen Squeegee oder Innerliner, aufweist.

5. Verfahren nach einem der vorangehenden Ansprüche, wobei
- die Festigkeitsträgerlage (2) eine parallel zur Messrichtung (23) der ersten und zweiten Abstandsmesseinheit (12, 13) verlaufende Dickenerstreckung (24) aufweist und die Dicke der ersten Lage (5) entlang dieser Dickenerstreckung (24) im Bereich von 1 bis 50 cm liegt, bevorzugt im Bereich von 1 bis 10 cm, und/oder
- der Abstand (11) zwischen einer Oberfläche (9) des metallischen Festigkeitsträgers (4) der Festigkeitsträgerlage (2) und der besagten Außenwand (6) der einen Lage im Bereich von 0 bis 50 cm liegt, bevorzugt im Bereich von 0,1 bis 50 cm,
und/oder
- der dritte Abstand (15) zwischen dem Radarwellensender und der besagten Außenwand (6) der einen Lage (5) im Bereich von 0,1 bis 100 cm liegt.

6. Verfahren nach einem der vorangehenden Ansprüche, wobei
- der Festigkeitsträger (4) der Festigkeitsträgerlage (2) ein Metall umfasst ausgesucht aus der Gruppe bestehend aus Stahl, Eisen, Magnesium, Aluminium, Chrom, Titan, Nickel, Zink, Kupfer und aus einer Mischung dieser Materialien,
und/oder
- die eine Lage (5) mit der besagten Außenwand (6) die Festigkeitsträgerlage (2) selbst oder eine weitere Kautschuklage ist.

7. Verfahren nach einem der vorangehenden Ansprüche, wobei der Abstand (14) zwischen dem Laser und der Bezugsfläche (10) und dem Abstand (15) zwischen dem Radarwellensender und der Bezugsfläche (10) entspricht oder die Differenz zwischen dem Abstand (14) zwischen dem Laser und der Bezugsfläche (10) und dem Abstand (15) zwischen dem Radarwellensender und der Bezugsfläche (10) vordefiniert ist.

8. Verfahren nach einem der vorangehenden Ansprüche, wobei das Verfahren zusätzlich den folgenden Schritt D) umfasst:
D) Rotieren des technischen Gummiartikels (1) mittels einer automatisierten Rotiereinheit um eine Rotationsachse oder Befördern des technischen Gummiartikels (1) mittels einer automatisierten Fördereinheit in eine Förderrichtung, sodass entlang einer Haupterstreckung (21) des technischen Gummiartikels (1) der Abstand (11) zwischen einer Messfläche (8) und einer Bezugsfläche (10) des technischen Gummiartikels (1) gemessen werden kann.

9. Verfahren nach einem der vorangehenden Ansprüche, wobei die erste Abstandsmesseinheit (12) mehrere Radarwellensender und Radarwellenempfänger umfasst und die zweite Abstandsmesseinheit (13) mehrere Laser und mehrere Laserlichtdetektoren umfasst, wobei die Radarwellensender und die Radarwellenempfänger in der ersten Abstandsmesseinheit (12) und die Laser und die Laserlichtdetektoren in der zweiten Abstandsmesseinheit (13) so angeordnet sind, dass der Abstand (11) zwischen einer Messfläche (8) und einer Bezugsfläche (10) des technischen Gummiartikels (1) entlang einer zur Haupterstreckung (21) senkrecht verlaufenden Quererstreckung (22) des technischen Gummiartikels (1) gemessen werden kann.

10. Verfahren nach einem der vorangehenden Ansprüche, wobei der eine oder die mehreren Radarwellensender und Radarwellenempfänger und der eine oder die mehreren Laser und Laserlichtdetektoren um einen Winkel gedreht werden kann, wobei die Drehachse der Drehung senkrecht zur Messrichtung (23) des Radarwellensenders und Radarwellenempfängers oder zur Messrichtung (23) des Lasers und Laserlichtdetektors ist.

11. Verfahren nach einem der vorangehenden Ansprüche, wobei der mindestens eine Laser und der mindestens eine Laserlichtdetektor dazu eingerichtet sind, elektromagnetische Wellen mit einer Wellenlänge im Bereich von 250 bis 1100 nm zu senden bzw. zu empfangen, mit einer Wellenlänge in einem Bereich von 300 bis 800 nm.

12. Verfahren nach einem der vorangehenden Ansprüche, wobei der mindestens eine Radarwellensender und der mindestens eine Radarwellenempfänger dazu eingerichtet sind, elektromagnetische Wellen in einem Frequenzbereich von 50 bis 500 GHz zu senden bzw. zu empfangen, bevorzugt in einem Frequenzbereich von in einem Bereich von 60 bis 250 GHz, besonders bevorzugt in einem Frequenzbereich von in einem Bereich von 76 bis 78 GHz und 122 bis 124 GHz.

13. Vorrichtung zur Durchführung eines Verfahrens nach den vorangehenden Ansprüchen, wobei die Vorrichtung umfasst:
- mindestens eine erste Abstandsmesseinheit (12), welche mindestens einen Radarwellensender und einen Radarwellenempfänger umfasst und zum Ermitteln eines Abstandes (11, 15) jeweils aus einer Laufzeit eines Radarwellensignals zwischen Radarwellensender, Mess-Bezugsfläche (8, 10) und Radarwellenempfänger geeignet ist,
- mindestens eine zweite Abstandsmesseinheit (13), welche mindestens einen Laser und einen Laserlichtdetektor umfasst und zum Ermitteln des Abstandes (14) jeweils aus einer Laufzeit eines Lasersignals zwischen Laser, Bezugsfläche (10) und Laserlichtdetektor geeignet ist,
und
- eine Halteeinheit zum Halten eines technischen Gummiartikels (1) während der Durchführung eines Verfahrens nach einem der vorangehenden Ansprüche oder während der Verwendung gemäß Anspruch 14.

14. Verwendung einer Vorrichtung nach Anspruch 14 zur Inspektion von technischen Gummiartikeln (1) mit einer Festigkeitsträgerlage (2).

## Claims

1. Method for inspecting technical rubber articles (1) with a reinforcing ply (2), such as for example a pneumatic vehicle tyre (1) with a carcass ply (2), comprising the following steps:
A) producing or providing a technical rubber article (1) with at least one reinforcing ply (2), wherein the reinforcing ply (2) comprises a rubber matrix (3) and a metal reinforcing ply (4),
B) measuring a first distance by means of a first distance measuring unit, wherein the first distance is measured between a measuring area (8) on a surface (9) of the metal reinforcing ply (4) and the first distance measuring unit (12), wherein the first distance measuring unit (12) comprises at least one radar wave transmitter and at least one radar wave receiver and is suitable for ascertaining a distance (11, 15) in each case from a transit time of a radar wave signal between the radar wave transmitter, the measuring/reference area (8, 10) and the radar wave receiver,
C) measuring a second distance (14) by means of a second distance measuring unit (13), wherein the second distance (14) is measured between a reference area (10), which is fixed in relation to the measuring area (8), on an outer wall (6) of the one ply (5) of the technical rubber article (1) and the second distance measuring unit (13), wherein the second distance measuring unit (13) comprises at least one laser and at least one laser light detector and is suitable for ascertaining the distance (14) in each case from a transit time of a laser signal between the laser, the reference area and the laser light detector,
wherein the distance between the outer wall (6) and the surface (9) of the reinforcing ply (4) is then ascertained from the difference between the first distance and the second distance.

2. Method according to Claim 1, wherein the technical rubber article (1) is a pneumatic vehicle tyre, a hose, a belt or a conveyor belt.

3. Method according to one of the preceding claims, wherein, in step B), the first distance measuring unit (12) additionally measures a third distance (15) between the reference area (10), which is fixed in relation to the measuring area (8), on an outer wall (6) of the one ply (5) of the technical rubber article (1) and the first distance measuring unit (12).

4. Method according to one of the preceding claims, wherein
- there are no further plies spatially between the first or second distance measuring unit (12, 13) and the said outer wall (6) of the one ply (5) and/or
- the technical rubber article (1) has further plies (7), such as for example further rubber plies, a squeegee or an inliner.

5. Method according to one of the preceding claims, wherein
- the reinforcing ply (2) has a thickness extent (24) running parallel to the measuring direction (23) of the first and second distance measuring units (12, 13), and the thickness of the first ply (5) along this thickness extent (24) lies in the range from 1 to 50 cm, preferably in the range from 1 to 10 cm,
and/or
- the distance (11) between a surface (9) of the metal reinforcing element (4) of the reinforcing ply (2) and the said outer wall (6) of the one ply lies in the range from 0 to 50 cm, preferably in the range from 0.1 to 50 cm,
and/or
- the third distance (15) between the radar wave transmitter and said outer wall (6) of the one ply (5) lies in the range from 0.1 to 100 cm.

6. Method according to one of the preceding claims, wherein
- the reinforcing element (4) of the reinforcing ply (2) comprises a metal selected from the group consisting of steel, iron, magnesium, aluminium, chromium, titanium, nickel, zinc, copper and a mixture of these materials,
and/or
- the one ply (5) with the said outer wall (6) is the reinforcing ply (2) itself or a further rubber ply.

7. Method according to one of the preceding claims, wherein the distance (14) between the laser and the reference area (10) corresponds to the distance (15) between the radar wave transmitter and the reference area (10) or the difference between the distance (14) between the laser and the reference area (10) and the distance (15) between the radar wave transmitter and the reference area (10) is predefined.

8. Method according to one of the preceding claims, wherein the method additionally comprises the following step D),
D) rotating the technical rubber article (1) by means of an automated rotating unit about an axis of rotation or transporting the technical rubber article (1) by means of an automated conveying unit in a conveying direction, so that the distance (11) between a measuring area (8) and a reference area (10) of the technical rubber article (1) can be measured along a main extent (21) of the technical rubber article (1).

9. Method according to one of the preceding claims, wherein the first distance measuring unit (12) comprises multiple radar wave transmitters and radar wave receivers and the second distance measuring unit (13) comprises multiple lasers and multiple laser light detectors, wherein the radar wave transmitters and the radar wave receivers in the first distance measuring unit (12) and the lasers and the laser light detectors in the second distance measuring unit (13) are arranged such that the distance (11) between a measuring area (8) and a reference area (10) of the technical rubber article (1) can be measured along a transverse extent (22) of the technical rubber article (1) running perpendicularly to the main extent (21).

10. Method according to one of the preceding claims, wherein the one or more radar wave transmitters and radar wave receivers and the one or more lasers and laser light detectors can be turned by an angle, wherein the turning axis of the turning is perpendicular to the measuring direction (23) of the radar wave transmitter and radar wave receiver or to the measuring direction (23) of the laser and the laser light detector.

11. Method according to one of the preceding claims, wherein the at least one laser and the at least one laser light detector are set up to transmit and receive electromagnetic waves with a wavelength in the range from 250 to 1100 nm, with a wavelength in a range from 300 to 800 nm.

12. Method according to one of the preceding claims, wherein the at least one radar wave transmitter and the at least one radar wave receiver are set up to transmit and receive electromagnetic waves in a frequency range from 50 to 500 GHz, preferably in a frequency range of in a range from 60 to 250 GHz, particularly preferably in a frequency range of in a range from 76 to 78 GHz and 122 to 124 GHz.

13. Device for implementing a method according to the preceding claims, wherein the device comprises:
- at least one first distance measuring unit (12), which comprises at least one radar wave transmitter and at least one radar wave receiver and is suitable for ascertaining a distance (11, 15) in each case from a transit time of a radar wave signal between the radar wave transmitter, the measuring/reference area (8, 10) and the radar wave receiver,
- at least one second distance measuring unit (13), which comprises at least one laser and at least one laser light detector and is suitable for ascertaining the distance (14) in each case from a transit time of a laser signal between the laser, the reference area (10) and the laser light detector,
and
- a holding unit for holding a technical rubber article (1) during the implementation of a method according to one of the preceding claims or during the use according to Claim 14.

14. Use of a device according to Claim 14 for inspecting technical rubber articles (1) with a reinforcing ply (2).

## Revendications

1. Procédé de contrôle d'articles techniques en caoutchouc (1) comprenant une couche de renfort (2), tel qu'un pneumatique de véhicule (1) comprenant une couche de carcasse (2), ledit comprenant les étapes suivantes :
A) réaliser ou fournir un article technique en caoutchouc (1) comprenant au moins une couche de renfort (2), la couche de renfort (2) comprenant une matrice de caoutchouc (3) et un renfort métallique (4),
B) mesurer une première distance au moyen d'une première unité de mesure de distance, la première distance étant mesurée entre une surface de mesure (8) située sur une surface supérieure (9) du renfort métallique (4) et la première unité de mesure de distance (12), la première unité de mesure de distance (12) comprenant au moins un émetteur d'ondes radar et un récepteur d'ondes radar et étant adaptée pour déterminer une distance (11, 15) à partir d'un temps de propagation d'un signal d'onde radar entre l'émetteur d'ondes radar, la surface de mesure/référence (8, 10) et le récepteur d'ondes radar,
C) mesurer une deuxième distance (14) au moyen d'une deuxième unité de mesure de distance (13), la deuxième distance (14) étant mesurée entre une surface de référence (10), fixe par rapport à la surface de mesure (8), sur une paroi extérieure (6) de l'une des couches (5) de l'article technique en caoutchouc (1) et la deuxième unité de mesure de distance (13), la deuxième unité de mesure de distance (13) comprenant au moins un laser et un détecteur de lumière laser et étant adaptée pour déterminer la distance (14) à partir d'un temps de propagation d'un signal laser entre le laser, la surface de référence et le détecteur de lumière laser,
la distance entre la paroi extérieure (6) et la surface supérieure (9) du renfort (4) étant déterminée à partir de la différence entre la première distance et la deuxième distance.

2. Procédé selon la revendication 1, l'article technique en caoutchouc (1) étant un pneumatique de véhicule, une tuyau, une courroie ou une bande transporteuse.

3. Procédé selon l'une des revendications précédentes, la première unité de mesure de distance (12) mesurant en outre à l'étape B) une troisième distance (15) entre la surface de référence (10), fixe par rapport à la surface de mesure (8), sur une paroi extérieure (6) de l'une des couches (5) de l'article technique en caoutchouc (1) et la première unité de mesure de distance (12).

4. Procédé selon l'une des revendications précédentes,
- aucune autre couche n'étant présente spatialement entre la première ou la deuxième unité de mesure de distance (12, 13) et ladite paroi extérieure (6) de l'une des couches (5),
et/ou
- l'article technique en caoutchouc (1) comportant d'autres couches (7), telles que d'autres couches de caoutchouc, un entre-plis ou un revêtement intérieur.

5. Procédé selon l'une des revendications précédentes,
- la couche de renfort (2) présentant une extension d'épaisseur (24) parallèle à la direction de mesure (23) des première et deuxième unités de mesure de distance (12, 13) et l'épaisseur de la première couche (5) le long de cette extension d'épaisseur (24) étant dans la gamme de 1 à 50 cm, de préférence dans la gamme de 1 à 10 cm,
et/ou
- la distance (11) entre une surface supérieur (9) du renfort métallique (4) de la couche de renfort (2) et ladite paroi extérieure (6) de l'une des couches étant dans la gamme de 0 à 50 cm, de préférence dans la gamme de 0,1 à 50 cm, et/ou
- la troisième distance (15) entre l'émetteur d'ondes radar et ladite paroi extérieure (6) de l'une des couches (5) étant dans la gamme de 0,1 et 100 cm.

6. Procédé selon l'une des revendications précédentes,
- le renfort (4) de la couche de renfort (2) comprenant un métal choisi dans le groupe comprenant l'acier, le fer, le magnésium, l'aluminium, le chrome, le titane, le nickel, le zinc, le cuivre et un mélange de ces matières, et/ou
- l'une des couches (5) comprenant ladite paroi extérieure (6) étant la couche de renfort (2) elle-même ou une autre couche de caoutchouc.

7. Procédé selon l'une des revendications précédentes, la distance (14) entre le laser et la surface de référence (10) correspondant à la distance (15) entre l'émetteur d'ondes radar et la surface de référence (10) ou la différence entre la distance (14) entre le laser et la surface de référence (10) et la distance (15) entre l'émetteur d'ondes radar et la surface de référence (10) étant prédéfinie.

8. Procédé selon l'une des revendications précédentes, le procédé comprenant en outre l'étape suivante D) :
D) faire tourner l'article technique en caoutchouc (1), au moyen d'une unité de rotation automatisée, sur un axe de rotation ou transporter l'article technique en caoutchouc (1), au moyen d'une unité de transport automatisée, dans une direction de transport de sorte que la distance (11) entre une surface de mesure (8) et une surface de référence (10) de l'article technique en caoutchouc (1) puisse être mesurée le long d'une extension principale (21) de l'article technique en caoutchouc (1).

9. Procédé selon l'une des revendications précédentes, la première unité de mesure de distance (12) comprenant plusieurs émetteurs d'ondes radar et récepteurs d'ondes radar et la deuxième unité de mesure de distance (13) comprenant plusieurs lasers et plusieurs détecteurs de lumière laser, les émetteurs d'ondes radar et les récepteurs d'ondes radar étant disposés dans la première unité de mesure de distance (12), et le laser et les détecteurs de lumière laser étant disposés dans la deuxième unité de mesure de distance (13), de façon à pouvoir mesurer la distance (11) entre une surface de mesure (8) et une surface de référence (10) de l'article technique en caoutchouc (1) le long d'une extension transversale (22) de l'article technique en caoutchouc (1) qui s'étend perpendiculairement à l'extension principale (21).

10. Procédé selon l'une des revendications précédentes, les un ou plusieurs émetteurs d'ondes radar et récepteurs d'ondes radar et les un ou plusieurs lasers et détecteurs de lumière laser pouvant être tournés d'un angle, l'axe de rotation étant perpendiculaire à la direction de mesure (23) de l'émetteur d'ondes radar et du récepteur d'ondes radar ou à la direction de mesure (23) du laser et du détecteur de lumière laser.

11. Procédé selon l'une des revendications précédentes, l'au moins un laser et l'au moins un détecteur de lumière laser étant conçus pour émettre respectivement recevoir des ondes électromagnétiques d'une longueur d'onde dans la gamme de 250 à 1100 nm, d'une longueur d'onde dans la gamme de 300 et 800 nm.

12. Procédé selon l'une des revendications précédentes, l'au moins un émetteur d'ondes radar et l'au moins un récepteur d'ondes radar étant conçus pour émettre respectivement recevoir des ondes électromagnétiques dans une gamme de fréquence de 50 à 500 GHz, de préférence dans une gamme de fréquences de 60 à 250 GHz, de manière particulièrement préférée dans une gamme de fréquences de 76 à 78 GHz et de 122 à 124 GHz.

13. Dispositif de mise en oeuvre d'un procédé selon les revendications précédentes, le dispositif comprenant :
- au moins une première unité de mesure de distance (12), qui comprend au moins un émetteur d'ondes radar et un récepteur d'ondes radar et qui est adaptée pour déterminer une distance (11, 15) à partir d'un temps de propagation d'un signal d'onde radar entre l'émetteur d'ondes radar, la zone de mesure/référence (8, 10) et le récepteur d'ondes radar,
- au moins une deuxième unité de mesure de distance (13), qui comprend au moins un laser et un détecteur de lumière laser et qui est adaptée pour déterminer la distance (14) à partir d'un temps de propagation d'un signal laser entre le laser, la surface de référence (10) et le détecteur de lumière laser,
et
- une unité de maintien destinée à maintenir un article technique en caoutchouc (1) pendant lamise en oeuvre d'un procédé selon l'une des revendications précédentes ou pendant l'utilisation selon la revendication 14.

14. Utilisation d'un dispositif selon la revendication 14 pour contrôler des articles techniques en caoutchouc (1) comprenant une couche de renfort (2).
